# FASCICULE DE BREVET EUROPEEN

(11) **EP 1 372 307 B1**
(45) Date de publication et mention de la délivrance du brevet: **01.12.2004**
(21) Numéro de dépôt: 03291301.4
(22) Date de dépôt: 30.05.2003
(51) Int. Cl.: H04L 12/56

(54) **Procédé de contrôle de transmission de données et unité de contrôle pour la mise en oeuvre du procédé**
Verfahren zur Datenübertragungssteuerung und Steuereinheit zur Durchführung des Verfahrens
Method for controlling data transmission and controlling unit for implementing the method

(30) Priorité: 14.06.2002 FR 0207371
(43) Date de publication de la demande: 17.12.2003
(73) Titulaire: Nortel Networks Limited, St. Laurent, Quebec H4S 2A9 (CA)
(72) Inventeur: Cayla, Stéphane, 78220 Viroflay (FR)
(74) Mandataire: Loisel, Bertrand

(56) Documents cités:
- WO-A-00/79808
- WO-A-01/33762

## Description

La présente invention concerne les techniques de contrôle de transmission de données le long de chemins de communication incluant une partie radio procurée par un réseau cellulaire de radiocommunication.

L'invention trouve une application particulière, mais non exclusive, dans le protocole de transport de données TCP ("Transmission Control Protocol"), normalisé par l'IETF ("Internet Engineering Task Force") et utilisé dans de nombreux systèmes de télécommunications reposant sur le protocole IP ("Internet Protocol") dans la couche réseau. TCP utilise un mécanisme d'acquittement et de retransmission des données. Les RFC ("Request For Comments") 2581 et 2988, respectivement publiées par l'IETF en avril 1999 et en novembre 2000, précisent des modalités de retransmission de données dans un système utilisant la couche protocolaire de transport TCP.

Selon la RFC 2988, un premier hôte TCP (par exemple un serveur) souhaitant transmettre des données à second hôte TCP (par exemple un terminal fixe), négocie avec celui-ci la taille des segments (unités de données du protocole TCP) qu'il vont pouvoir échanger. La taille maximale d'un segment TCP est de 1500 octets, mais peut également être plus faible, notamment dans le cas où un des hôtes ne supporte que des tailles des segments plus limitées.

Le premier hôte TCP évalue ensuite un temps d'aller-retour pour les données, nommé RTT ("Round-Trip Time"), correspondant à la durée entre la transmission d'un ensemble de segments et la réception par le serveur d'un message d'acquittement envoyé par le terminal en réponse à la réception de ces segments de données. Il faut noter qu'il n'y a pas de correspondance un à un entre les segments de données TCP et les acquittements, ce qui signifie qu'un acquittement peut être retourné par le terminal en réponse à la réception de plusieurs segments de données transmis par le serveur. L'identification des données se fait grâce à un mécanisme de numérotation des octets échangés selon lequel chaque segment transmis du serveur vers le terminal contient un numéro de séquence de 32 bits, correspondant au numéro du premier octet porté par le segment transmis, et chaque acquittement contient le numéro de séquence suivant que le terminal s'attend à recevoir de la part du serveur, c'est-à-dire le numéro de séquence du dernier octet reçu avec succès plus 1.

Le serveur évalue également, pour chaque nouvelle valeur de RTT calculée, un paramètre lissé SRTT ("Smoothed Round-Trip Time"), qui est une fonction du RTT. De façon typique, le SRTT tient compte dans une faible proportion de la nouvelle valeur de RTT calculée et dans une plus grande proportion de la valeur de SRTT précédemment calculée.

Enfin, un paramètre RTO ("Retransmit Time Out") est évalué par le serveur. Il est utilisé pour contrôler le temps entre l'envoi d'un ensemble de données et la retransmission de cet ensemble lorsque aucun acquittement correspondant à ces données n'est reçu par le serveur depuis le terminal. Le RTO est une fonction dépendant directement de la moyenne et de la variance du paramètre SRTT, de sorte que sa valeur augmente lorsque le RTT subit des variations significatives. Ainsi, on évite de retransmettre trop rapidement un ensemble de données susceptibles d'avoir été reçues par le terminal. Une fois une retransmission effectuée à l'expiration du RTO, le serveur peut augmenter la valeur de RTO, par exemple en la multipliant par 2, afin d'éviter des retransmissions successives trop proches dans le temps.

Un tel processus est bien adapté à une transmission de données entre hôtes TCP fixes, car en général les temps d'acheminement des données sont relativement stables. Les éventuelles variations de RTT, par exemple en cas de congestion, s'accompagnent de faibles variations du RTO, si bien que les acquittements peuvent être reçus le plus souvent avant retransmission des données considérées.

Considérons désormais une transmission de données dans un contexte de mobilité, par exemple entre un serveur de données et un terminal radio, la transmission se faisant par l'intermédiaire d'un réseau de radiocommunication. De telles transmissions de données sont connues, par exemple via un réseau GPRS ("General Packet Radio Service") tel que défini par l'organisation ETSI ("European Télécommunications Standards Institute"). Le terminal radio et l'hôte TCP distant (par exemple un serveur) incluent comme dans le cas précédent, une couche protocolaire TCP pour assurer le transport des données. Dans un tel cas, le réseau de radiocommunication relaie, sans les interpréter, les segments TCP entre le terminal et le serveur.

Dans un tel système, le terminal radio est en liaison radio avec une station de base reliée au serveur de données par l'intermédiaire d'une unité de contrôle de paquets appelée PCU ("Packet Control Unit") et de commutateurs appelés GSN ("GPRS Serving Nodes") spécifiques au réseau coeur du GPRS.

Compte tenu de la mobilité du terminal, il peut être déterminé, par exemple suite à une analyse de mesures de conditions de propagation radio, qu'il y a lieu de basculer la communication sur une seconde station de base. Le terminal en informe alors le réseau GPRS. Ce mécanisme est appelé resélection de cellule.

Toutefois, avant de recevoir l'information de resélection de la part du terminal, le réseau ne sait pas que le terminal n'est plus accessible depuis la première station de base et continue à lui transmettre les données suivant le chemin de communication passant par cette première station. Le terminal n'étant alors pas en mesure d'acquitter les données envoyées par le serveur, ce dernier retransmet les données non acquittées à chaque expiration du RTO, tout en augmentant la valeur du RTO en vue de la prochaine retransmission.

La mobilité du terminal étant prise en compte par le réseau au bout d'une durée typique de 15 secondes, le RTO peut, dans l'intervalle, voir sa valeur croître considérablement. Ensuite, une fois le lien radio bien établi entre la seconde station de base et le terminal radio, les segments non acquittés seront retransmis par le serveur à l'expiration du RTO, avant d'être finalement acheminés vers le terminal et, si tout se passe bien, acquittés par celui-ci. Dans un tel cas, la mobilité du terminal a donc pour effet d'introduire des périodes potentiellement très longues d'interruption de la transmission de données, qui seront très pénalisantes pour l'utilisateur du terminal, surtout si le service en cours nécessite un débit rapide et relativement constant.

Les données transmises par le serveur sont provisoirement stockées sous forme de paquets GPRS dans des tampons du PCU avant d'être remises au terminal radio. Dans le cas le plus courant, l'unité de contrôle videra ses tampons avant la reprise de la transmission vers la seconde station de base.

Cependant, l'organisation 3GPP ("Third Generation Partnership Project") de normalisation des systèmes dits de 3^{ème} génération a prévu que le réseau puisse commander, de façon optionnelle et à condition que la seconde station de base dépende du même PCU que la première station de base, un transfert vers la seconde station de base de toutes les données présentes dans les tampons du PCU à destination du terminal.

Cette procédure dite FLUSH-LL est décrite dans la section 8.1 de la spécification technique TS 08.18, version 8.7.0, publiée par le 3GPP en avril 2001. Elle s'appuie sur la transmission d'un paquet FLUSH-LLC PDU du réseau coeur GPRS au PCU suite à la signification par le terminal de sa resélection de cellule. Ce paquet contient un identifiant du terminal nommé TLLI (« Temporary Logical Link Identity »), ainsi que les paramètres BVCI ("BSSGP Virtual Connection Identifier") permettant d'identifier la première et la seconde station de base. A la réception de ce message, le PCU est capable de retrouver l'ensemble des données stockées dans ses tampons à destination d'un terminal via la première station de base et de les transférer vers la seconde station de base. Cette dernière relaie enfin les données au terminal radio, sous forme de trames, dès que le lien radio associé est établi, de sorte que le terminal peut acquitter les données correspondantes dès réception et recombinaison des trames pour retrouver les segments TCP transmis.

On s'affranchit ainsi du délai d'attente de la prochaine retransmission - qui peut être très long à ce stade - pour commencer à acquitter les données précédemment transmises. Toutefois, étant donnée la durée de mise à jour du lien radio par le réseau, les tampons du PCU contiendront en général un grand nombre de données à l'attention du terminal. Les paquets comprendront en outre des données provenant de différents segments TCP, dont certaines retransmissions des segments non acquittés, émises par le serveur à chaque expiration du RTO. Ainsi, même si un gain en temps existe entre cette option et le mode de fonctionnement classique, la transmission de données subit tout de même une longue interruption liée notamment au temps de transfert, sur l'interface radio, de l'ensemble des paquets, parfois redondants, contenus dans les tampons du PCU et destinés au terminal.

Le document WO 01/33762 A (NOKIA NETWORKS OY), 10.05.2001 divulgue un procédé de contrôle de transmission de données d'une unité distante vers un terminal radio.

Un but de la présente invention est de réduire le délai d'attente avant la reprise de la transmission de données. Un autre but de l'invention est de ne pas encombrer la voie radio de transmissions redondantes et inutiles.

L'invention propose ainsi un procédé de contrôle de transmission de données d'une unité distante vers un terminal radio par l'intermédiaire d'un réseau cellulaire de radiocommunication comprenant des stations de base, au moins une unité de contrôle de paquets apte à communiquer avec le terminal par l'intermédiaire d'au moins deux des stations de base, et des moyens d'acheminement de données entre l'unité distante et l'unité de contrôle de paquets, dans lequel certaines au moins des données transmises par l'unité distante à destination du terminal sont stockées provisoirement à l'unité de contrôle de paquets, dans lequel l'unité distante est agencée pour recevoir du terminal des acquittements relatifs à des segments de données transmis et pour retransmettre des segments de données non acquittés à l'expiration d'un temps de retransmission dépendant des acquittements reçus. Selon l'invention, le procédé comprend les étapes suivantes :
- transmettre des segments de données issus de l'unité distante au terminal par l'intermédiaire d'une première des stations de base reliée à l'unité de contrôle de paquets ; et
- en réponse à une requête de transfert de communication vers une seconde des stations de base reliée à l'unité de contrôle de paquets, retransmettre vers le terminal, par l'intermédiaire de la seconde station de base, une partie seulement des données stockées provisoirement à l'unité de contrôle de paquets.

La retransmission d'une partie des données stockées à l'unité de contrôle, qui peut être constituée de l'équivalent d'un seul segment de données, par exemple le premier transmis par l'unité distante et non acquitté par le terminal, présente l'avantage de relancer rapidement le processus de transmission et d'empêcher une augmentation trop conséquente des paramètres TCP (RTT, RTO) présentés en introduction.

Un autre aspect de la présente invention se rapporte à une unité de contrôle de paquets pour un réseau cellulaire de communication, comprenant des moyens d'interface avec un commutateur du réseau cellulaire et des moyens pour communiquer avec un terminal radio par l'intermédiaire d'au moins des première et seconde stations de base. Les moyens d'interface avec le commutateur comprennent des moyens pour mémoriser provisoirement des trames de données portant des segments de données issus d'une unité distante. Les moyens pour communiquer avec le terminal comprennent des moyens de transmission des trames de données sous forme de blocs de données en mode acquitté. Lesdits moyens de mémorisation sont agencés pour conserver chaque trame de données en mémoire tant que l'ensemble des données de la trame n'a pas été acquitté par le terminal. L'unité de contrôle de paquets comprend en outre des moyens de retransmission pour, à la suite d'une requête de transfert de communication de la première station de base vers la seconde station de base, retransmettre vers le terminal par l'intermédiaire de la seconde station de base, au moins un bloc de données correspondant à une partie seulement des trames de données mémorisées provisoirement et qui ont été transmis par l'intermédiaire de la première station de base.

D'autres particularités et avantages de la présente invention apparaîtront dans la description ci-après d'exemples de réalisation non limitatifs, en référence aux dessins annexés, dans lesquels :
- la figure 1 est un schéma d'un système mettant en oeuvre l'invention dans son application à un réseau GPRS ;
- la figure 2 est une représentation de couches protocolaires entrant en jeu dans l'invention selon le système de la figure 1 ;
- la figure 3 est un chronogramme d'un exemple simplifié de transmission lors d'une procédure de mobilité dans une réalisation de l'art antérieur ;
- la figure 4 est un chronogramme du même exemple de transmission lors d'une procédure de mobilité dans une réalisation de l'invention.

On se place désormais dans l'application, non limitative, de l'invention à un système GPRS.

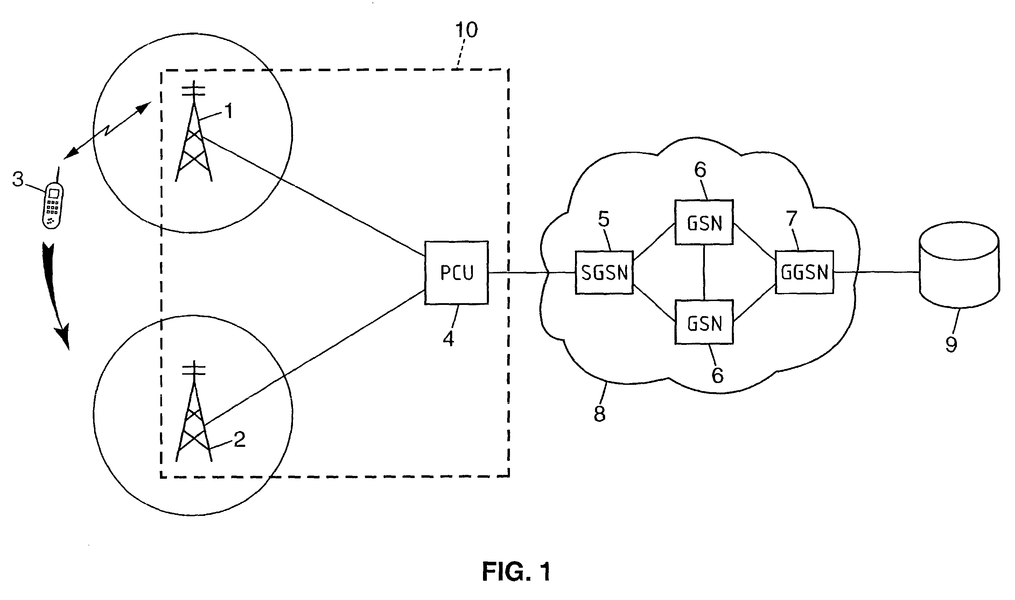

La figure 1 montre deux unités 3, 9 communiquant entre elles conformément au protocole TCP/lP. Sans que ceci soit restrictif, dans la suite de l'exposé, ces deux unités sont respectivement un terminal radio 3 et un serveur de données 9.

Le terminal radio est apte à communiquer avec un sous-système d'accès 10 d'un réseau cellulaire de radiocommunication, ce sous-système d'accès comprenant des stations de base 1, 2 réparties sur la zone de couverture du réseau, des contrôleurs de réseau radio appelés BSC ("Base Station Controller") non représentés sur la figure et des unités de contrôle de paquets (PCU) 4.

Le serveur 9 est relié, directement ou indirectement, à un sous-système de réseau (ou réseau coeur) 8 du réseau cellulaire, de sorte qu'il peut échanger des données avec le terminal radio 3. Le sous-système 8 est composé d'un ensemble de commutateurs de données 5-7 appelés GSN ("GPRS Support Node") maillés entre eux.

Le commutateur auquel est relié le PCU 4 desservant un terminal donné 3 est appelé SGSN ("Serving GSN"). Ce SGSN 5 permet d'accéder au service GPRS depuis le terminal. Il est notamment chargé de la gestion de la mobilité des terminaux qui sont dans sa zone de couverture, c'est-à-dire, dans notre exemple, qu'il maintient une connaissance de la station de base de rattachement pour le terminal 3.

Le sous-système 8 comprend également une passerelle 7 (GGSN, "Gateway GSN") à laquelle est relié le serveur de données 9, par exemple via un réseau de données externe comme le réseau Internet (non représenté sur la figure 1) ou un Intranet. Dans la couche lP implémentée dans le terminal radio 3 et le serveur 9, ce GGSN 7 constitue le routeur le plus proche du terminal 3. Le sous-système 8, essentiellement composé de commutateurs de données, sert donc à acheminer des données du serveur 9 vers le PCU 4.

Le PCU 4 appartient fonctionnellement au sous-système d'accès 10, mais il peut dans certaines architectures être situé au même endroit que le SGSN 5. Le réseau de radiocommunication de la figure 1 comporte deux stations de base 1, 2 toutes deux reliées au même PCU 4.

Le PCU 4 transmet les données reçues du SGSN 5 à la station de base 1 avec laquelle le terminal radio 3 est en communication. De même, le terminal radio 3 peut envoyer des données à l'attention du serveur 9. Pour ce faire, il transmet les données à la station de base 1 qui les communique au PCU 4, qui à son tour les transmet au SGSN 5. Puis les données sont acheminées à travers le sous-système 8 jusqu'au GGSN 7 pour aboutir enfin au serveur 9.

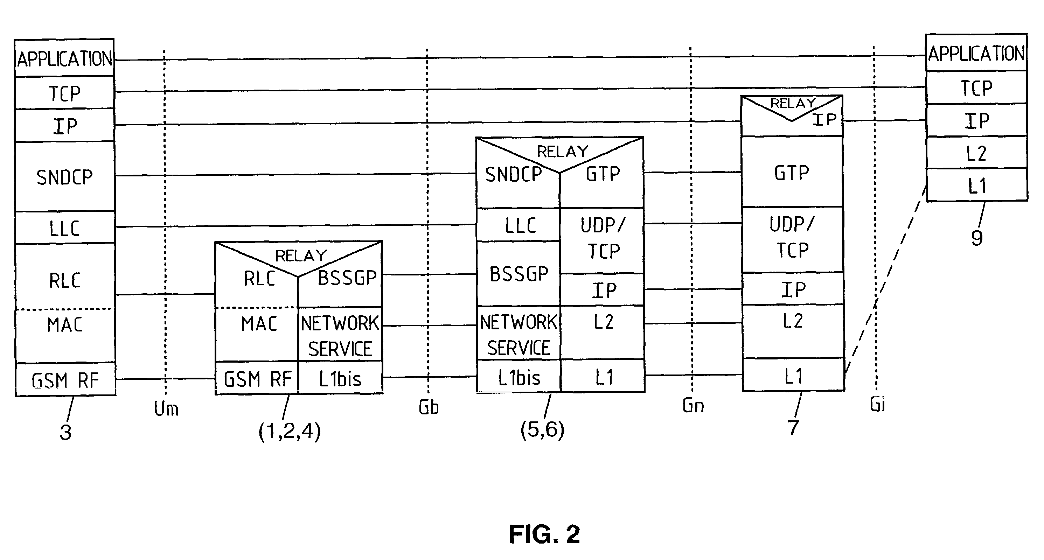

De nombreux protocoles interviennent dans la transmission de données entre le terminal 3 et le serveur 9, bien qu'un nombre limité d'entre eux soient réellement concernés par la présente invention et donc plus précisément visés dans la suite. Ils sont représentés sur la figure 2 et sont décrits dans la spécification technique GSM 03.60 version 7.4.1 publiée en septembre 2000 par l'ETSI.

Les échanges entre le terminal 3 et une station de base, telle que la station 1 dans notre exemple, se font par l'intermédiaire d'une interface radio dite Um, dont le fonctionnement détaillé peut être trouvé dans la spécification technique ETSI TS 101 350, Digital cellular télécommunications system (Phase 2+); General Packet Radio Service (GPRS); Overall description of the GPRS radio interface; Stage 2 (3GPP TS 03.64, version 8.10.0, Release 1999), publiée en février 2002 par l'ETSI. Les protocoles de couche 2 du modèle OSI utilisés sur cette interface sont les protocoles RLC/MAC (« Radio Link Control / Medium Access Control ») décrits dans la norme européenne ETSI EN 301 349, Digital cellular telecommunications system (Phase 2+) ; General Packet Radio Service (GPRS) ; Mobile Station (MS) - Base Station System (BSS) interface; Radio Link Control/Medium Access Control (RLC/MAC) protocol (GSM 04.60, version 8.4.1, Release 1999), publiée par l'ETSI en octobre 2000.

Les données sont ensuite converties dans le réseau radio et le PCU 4 pour pouvoir être transmises au SGSN 5 via l'interface Gb. Cette interface est de type asynchrone et repose sur le protocole de relais de trames (FR, "Frame Relay"), ainsi qu'un protocole appelé BSSGP ("BSS GPRS Protocol") qui transporte des informations de routage et de qualité de service entre le BSS et le SGSN.

Le SGSN 5 convertit les données pour les mettre sous un format plus proche des systèmes de transmission de données de type Internet. Un protocole tunnel (GTP, "GPRS Tunnelling Protocol) est également utilisé pour la transmission des données sous forme de paquets entre les GSN 5-7 via l'interface Gn. Cette interface est décrite dans la spécification technique ETSI TS 101 347, Digital cellular télécommunications system (Phase 2+); General Packet Radio Service (GPRS); GPRS Tunnelling Protocol (GTP) across the Gn and Gp Interface (3GPP TS 09.60 version 7.8.0 Release 1998), publiée par l'ETSI en octobre 2001.

Enfin, les données sont échangées entre le GGSN 7 et le serveur 9 par l'intermédiaire de l'interface Gi selon un protocole de type IP ("Internet Protocol") connu en soi.

Dans un mode de réalisation typique de l'invention, le terminal radio 3 et le serveur de données 9 partagent une couche protocolaire de transport TCP telle que présentée en introduction et capable de contrôler les transmissions de données en offrant des processus d'acquittement des données transmises ainsi que des retransmissions pour les données non acquittées.

Comme la figure 2 le montre, les segments de données TCP sont acheminés entre le terminal 3 et le serveur 9 grâce à des mécanismes de relais disponibles à différents niveaux dans les couches protocolaires et dans les différentes entités du réseau (1, 2, 4, 5, 6, 7), comme décrit plus haut. Au-dessus de la couche TCP, le terminal 3 et le serveur 9 disposent de couches applicatives correspondant au service que l'utilisateur du terminal 3 souhaite utiliser. Lorsque le serveur 9 doit transmettre des segments TCP au terminal 3, ceux-ci sont acheminés comme décrit précédemment à l'intérieur du sous-réseau 8 puis au PCU 4.

Le PCU 4 dispose de tampons capables de stocker provisoirement les données qui lui ont été transmises par le SGSN 5, après segmentation par le SGSN 5 des données reçues du serveur 9. Le résultat de cette segmentation est constitué par des trames LLC ("Logical Link Control"). Le PCU 4 transmet alors progressivement les données qu'il a reçues à l'attention du terminal 3, vers la station de base 1 qui est en communication avec le terminal sous forme de blocs RLC/MAC, eux-mêmes transmis dans des trames radio. De façon avantageuse, les tampons dont il est question ici stockent provisoirement les données contenues dans les trames LLC transmises par le SGSN 5. Ces données restent donc présentes dans les tampons du PCU 4 tant que l'ensemble des blocs RLC/MAC résultant de la segmentation de ces trames LLC n'a pas été acquitté. D'autres tampons peuvent être présents dans le PCU pour stocker provisoirement les blocs RLC/MAC non acquittés par le terminal et pour les répéter en cas d'altération ou de perte sur la voie radio.

La station de base 1 est chargée de transférer les données au terminal 3 sous forme de trames radio. Une fois les données reçues au niveau du terminal, celui-ci les ré-assemble pour reconstituer les blocs RLC/MAC qu'il acquitte dans la couche 2. La couche 2 ré-assemble aussi les trames LLC. Le protocole LLC utilise ces trames LLC pour reconstituer des datagrammes IP, lesquels permettent finalement au terminal de retrouver le format en segments, propre à la couche de transport TCP. Puis il acquitte la réception de ces segments en renvoyant au serveur 9 un message d'acquittement contenant un numéro de séquence identifiant les données acquittées. Il est ainsi possible d'acquitter au niveau du terminal 3 chaque segment de données reçu.

Dans un autre mode de réalisation, le serveur 9 et le terminal 3 ont négocié avant le début de la transmission de données un nombre maximum de segments de données à acquitter simultanément. Dans ce dernier cas, le terminal 3 peut acquitter chaque segment séparément, mais il peut aussi choisir d'acquitter un ensemble de segments successifs reçus dans la limite du nombre maximum négocié.

Dans le cadre d'une procédure de resélection de cellule, le terminal radio 3 peut requérir un transfert de communication vers une autre station de base, telle que la station de base 2, après analyse de mesures radio faites sur des signaux de balise émis par différentes stations de base voisines de la cellule courante. De façon connue, cette analyse vise à rechercher la cellule procurant le meilleur niveau de signal reçu par le terminal. Dans une implémentation classique du GPRS, en effet, le transfert de communication d'une cellule couverte par une station de base vers une autre est contrôlé entièrement par le terminal radio lui-même. Le SGSN 5 n'intervient donc pas dans la décision du transfert de cellules.

Cette procédure de sélection de cellule est décrite notamment dans la section 4.5 de la spécification technique GSM 03.22, version 8.3.0, publiée en avril 2000 par l'ETSI. Une fois que le terminal radio 3 a identifié une station de base 2 proposant un lien radio dont les conditions de propagation sont meilleures que celles proposées par la station de base 1, le terminal radio 3 transmet de façon classique une trame de niveau 3 (LLC) qui peut éventuellement être vide, à destination du SGSN 5. Cette trame de contrôle contient un TLLI caractéristique du terminal 3.

Dans l'exemple illustré par la figure 1, la zone de localisation dans laquelle une valeur de TLLI est associée au terminal 3, regroupe les cellules couvertes par les stations de base 1 et 2, si bien que le TLLI utilisé pour le terminal radio 3 sera le même dans les échanges du terminal avec le SGSN 5 quelle que soit la station de base avec laquelle le terminal communique. La trame LLC étant transmise par le terminal 3 via la station de base 2, le SGSN 5 est capable de mettre à jour dans une table de localisation la station de base de raccordement du terminal 3, le terminal étant identifié grâce au TLLI inséré dans la trame LLC.

Avant la transmission de la trame LLC par le terminal radio 3 au SGSN 5, ce dernier n'a pas connaissance de la nouvelle localisation du terminal radio 3 et considère donc que celui-ci est toujours rattaché à la station de base 1. Ainsi, tout segment de données à destination du terminal 3 issu d'une transmission du serveur de données 9, est acheminé par le SGSN 5 puis par le PCU 4 vers la station de base 1. Le terminal 3 ayant rompu son lien radio avec la station de base 1 sans l'en informer, il n'est plus en mesure de recevoir des trames de données depuis la station de base 1. Aucun acquittement des blocs RLC/MAC transmis n'a donc lieu de la part du terminal 3, ce qui est interprété par le PCU 4 comme une perte de communication. Pendant cette période, la couche TCP du serveur 9 augmente son paramètre RTO pour la communication avec le terminal 3 comme décrit en introduction.

Une fois la trame LLC de mise à jour de la localisation du terminal 3 transmise au SGSN 5, celui-ci est en mesure de rétablir un lien de communication avec le terminal 3 via la station de base 2. Cela signifie que de nouvelles données reçues du serveur 9 à destination du terminal 3 pourront être acheminées jusqu'au terminal 3 par l'intermédiaire du PCU 4 et de la station de base 2.

Selon l'invention, lorsque le SGSN 5 a reçu de la part du terminal 3 un message de mise à jour de sa station de base de rattachement, il commande au PCU 4, dont les tampons de mémorisation contiennent des données qui n'ont pas été reçues par le terminal 3 lorsqu'il était en cours de procédure de resélection de cellule, de transférer une partie seulement des données mémorisées vers la station de base 2. Cette dernière transmet alors les données de la part du PCU 4 à destination du terminal 3. La commande, par le SGSN 5, du transfert d'une partie des données stockées par le PCU 4 peut se faire grâce à la transmission du SGSN 5 au PCU 4 d'un paquet de type FLUSH-LLC, tel que décrit précédemment. Ce paquet est alors interprété par le PCU 4 de façon à ce qu'il transfère une partie des données vers la station de base 2.

Dans un autre mode de réalisation, par exemple celui où le PCU 4 et le SGSN 5 sont co-localisés au sein d'un même équipement, la commande de transfert partiel des données peut résulter d'une signalisation propre à l'équipement considéré.

Les données stockées dans les tampons du PCU 4 contiennent à la fois des données utiles et des retransmissions de ces mêmes données effectuées par le serveur de données 9 à chaque expiration de son compteur RTO. Une transmission par le PCU 4 à destination du terminal 3 de l'ensemble des données qu'il a stocké provisoirement dans ses tampons serait contre-productive à plusieurs titres :
- elle encombrerait la voie radio entre la station de base 2 et le terminal 3, en y faisant transiter le cas échéant plusieurs retransmissions d'un même ensemble de données ;
- elle inciterait le terminal 3 à acquitter à plusieurs reprises des données identiques ;
- selon la quantité d'informations transmises, elle n'empêcherait pas forcément d'autres transmissions des mêmes données de la part du serveur 9 au niveau TCP, puisque chaque acquittement transmis par le terminal 3 peut se traduire, de la part du serveur 9, par une reprise de la transmission des données non encore acquittées.

Selon l'invention, seule une partie des données stockées provisoirement dans les tampons du PCU 4 est donc communiquée à la station de base pour être relayée jusqu'au terminal 3.

Dans une réalisation typique, les données retransmises par le PCU 4 peuvent correspondre sensiblement à un segment de données (c'est-à-dire les trames LLC issues d'un même segment TCP). Pour cela, le PCU 4 transmet, depuis ses tampons, un nombre d'octets correspondant sensiblement à la taille d'un segment TCP s'il la connaît. Dans le cas contraire, il peut transmettre les 1500 octets correspondants à la taille maximale d'un segment. Il peut aussi avantageusement transmettre jusqu'à 3000 octets des données contenues dans ses tampons, de manière à s'assurer de la transmission d'un segment complet au minimum.

Il peut de préférence s'agir du premier segment non encore acquitté par le terminal radio. Cela est notamment possible lorsque la taille des tampons du PCU 4 permet de garder en mémoire un nombre suffisant de données. Pour s'assurer de disposer d'une taille suffisante pour les tampons du PCU dans un grand nombre de cas, un opérateur ayant la maîtrise du paramétrage des hôtes TCP, c'est-à-dire du serveur 9 et du terminal 3, peut avantageusement fixer la quantité maximale de données que le serveur 9 peut transmettre au terminal 3 sans attendre d'acquittement en retour, à une valeur bien inférieure à la taille des tampons du PCU 4.

Dans ce cas de figure, le terminal peut acquitter un segment reçu en envoyant un message d'acquittement à destination du serveur 9. A la réception de cet acquittement, le serveur 9 calcule alors une nouvelle valeur de RTT pour la connexion TCP en cours avec le terminal 3 et met à jour son compteur RTO en fonction de cette valeur de RTT calculée, comme décrit en introduction.

La réception par le serveur 9 de l'acquittement provenant du terminal 3 du premier segment non encore acquitté, a pour effet de reprendre la transmission à partir des données acquittées, c'est-à-dire à partir du segment dont le premier octet possède le numéro de séquence fourni par le terminal dans son acquittement. Cela évite donc à l'utilisateur du terminal 3 de subir une interruption de service trop longue dans le transfert de données qu'il effectue. De plus, la reprise de la transmission de la part du serveur 9 s'accompagne d'un recalcul du RTO qui interrompt le processus d'augmentation régulière de ce compteur tel que cela a été présenté en introduction. Si par la suite des segments de données ne sont pas acquittés par le terminal 3, leur retransmission pourra être faite dans un délai raisonnable sans impact excessif sur la qualité de la communication.

Dans un autre mode de réalisation, un nombre entier de segments de données, strictement supérieur à 1, est acquitté par le terminal radio. A la réception d'un acquittement retourné par le terminal, le serveur de données 9 répétera alors tous les segments de données qu'il avait transmis au terminal radio 3 et qui n'ont pas fait l'objet d'un acquittement de sa part.

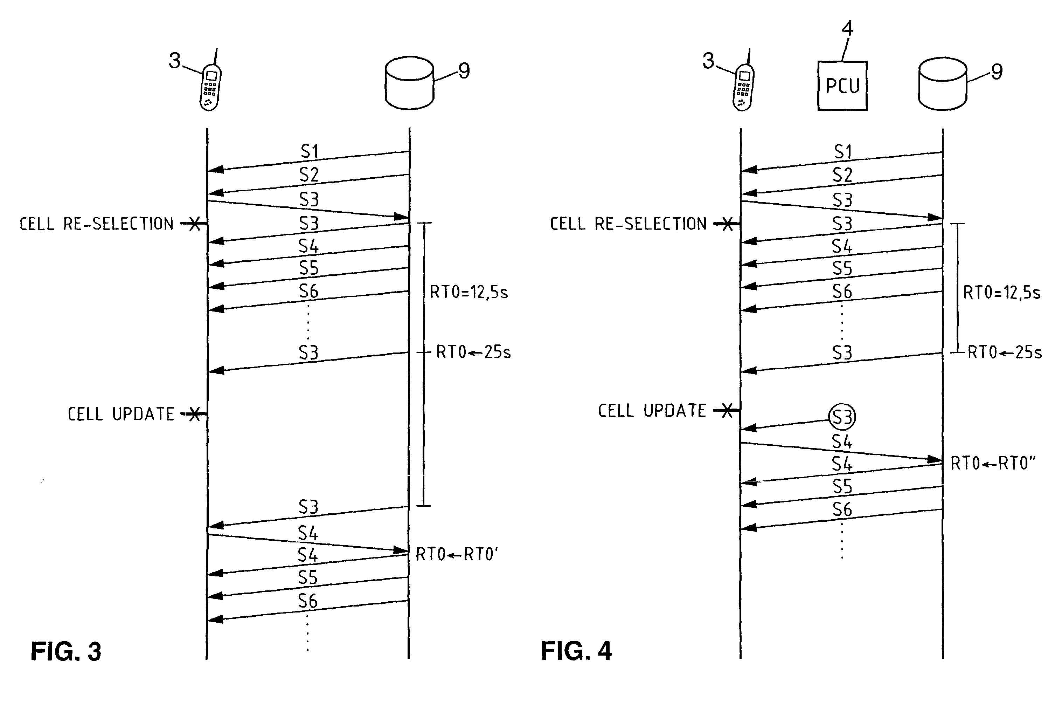

Les figures 3 et 4 donnent une idée du gain temporel qui peut être obtenu par l'invention (figure 4) par rapport à une transmission selon un mécanisme TCP classique (figure 3) lors d'une procédure de resélection de cellule GPRS.

Sur ces schémas, le serveur 9 envoie des segments S1, S2,..., S6 au terminal 3. Ce dernier acquitte les deux premiers segments reçus grâce à un message montant insérant le numéro de séquence du prochain segment qu'il s'attend à recevoir (S3). Il commence ensuite sa resélection de cellule, selon la procédure décrite précédemment. Les segments suivants S3 à S6 ne sont donc plus acquittés et le serveur 9 commence à augmenter le RTO, préalablement fixé à une valeur de 12,5 secondes dans l'exemple choisi, pour sa connexion avec le terminal 3. Ainsi, au bout de 12,5 s, le serveur retransmet S3 et double la valeur du RTO, qui passe donc à 25 s. Le terminal 3 indique alors au réseau la cellule sur laquelle il va continuer sa communication, grâce à la procédure de mise à jour décrite précédemment. Les comportements diffèrent à partir d'ici selon le mode de fonctionnement choisi.

Dans le mécanisme TCP classique illustré par la figure 3, qui n'est pas bien adapté au contexte de la resélection GPRS, le serveur attend l'expiration des 25 s du RTO avant de retransmettre S3. A la réception de ce segment, le terminal 3 acquitte S3, ce qui a pour effet de permettre la reprise de la transmission. Le serveur 9 calcule à la réception de l'acquittement de S3, une nouvelle valeur de RTO, prenant en compte le temps d'aller-retour RTT entre la première émission de S3 et son acquittement (soit un RTT légèrement supérieur à 12,5 + 25 = 37,5 s).

On peut noter qu'une notification de changement de cellule plus tardive par le terminal 3 pourrait entraîner un nouveau doublement du RTO, le portant à 50 s. Par la suite, tout segment transmis et non reçu au terminal 3, ne serait donc retransmis par le serveur 9 qu'après un temps très long, pénalisant pour le transfert en cours.

Selon un mode de réalisation de l'invention, S3 est retransmis par le PCU 4 immédiatement après la notification du changement de cellule par le terminal 3. Ce dernier acquitte alors le segment. La nouvelle valeur de RTT calculée par le serveur 9 est donc légèrement supérieure à 12,5 secondes et le RTO n'est pas excessivement augmenté. Sur l'exemple choisi, on peut donc s'attendre à avoir des gains approximatifs de l'ordre de 25 à près de 90 secondes sur le délai de retransmission lors d'une perte de données ultérieure.

## Revendications

1. Procédé de contrôle de transmission de données d'une unité distante (9) vers un terminal radio (3) par l'intermédiaire d'un réseau cellu laire de radiocommunication (8, 10) comprenant des stations de base (1,2), au moins une unité de contrôle de paquets (4) apte à communiquer avec le terminal par l'intermédiaire d'au moins deux des stations de base, et des moyens (8) d'acheminement de données entre l'unité distante et l'unité de contrôle de paquets, dans lequel certaines au moins des données transmises par l'unité distante à destination du terminal sont stockées provisoirement à l'unité de contrôle de paquets, dans lequel l'unité distante est agencée pour recevoir du terminal des acquittements relatifs à des segments de données transmis et pour retransmettre des segments de données non acquittés à l'expiration d'un temps de retransmission dépendant des acquittements reçus, **caractérisé en ce qu'**il comprend les étapes suivantes:
- transmettre des segments de données issus de l'unité distante au terminal par l'intermédiaire d'une première des stations de base (1) reliée à l'unité de contrôle de paquets; et
- en réponse à une requête de transfert de communication vers une seconde des stations de base (2) reliée à l'unité de contrôle de paquets, retransmettre vers le terminal, par l'intermédiaire de la seconde station de base, une partie seulement des données stockées provisoirement à l'unité de contrôle de paquets.

2. Procédé selon la revendication 1, dans lequel ladite partie des données retransmise vers le terminal (3) consiste en sensiblement un segment précédemment transmis par l'intermédiaire de la première station de base (1) et qui n'a pas été acquitté par le terminal.

3. Procédé selon la revendication 1 ou 2, dans lequel la requête de transfert de la communication est reçue du terminal (3) par un commutateur (5) des moyens d'acheminement (8), et en réponse à la réception de ladite requête, ledit commutateur commande la retransmission de ladite partie des données par l'unité de contrôle de paquets (4).

4. Procédé selon l'une quelconque des revendications précédentes, dans lequel ledit temps de retransmission augmente lorsque les acquittements sont reçus à l'unité distante (9) avec un retard croissant.

5. Procédé selon l'une quelconque des revendications précédentes, dans lequel les données transmises entre les moyens d'acheminement (8) et le terminal (3) incluent un identifiant dudit terminal, indépendant de la station de base (1, 2) avec laquelle le terminal est en liaison.

6. Unité de contrôle de paquets (4) pour un réseau cellulaire de communication, comprenant des moyens d'interface avec un commutateur (5) du réseau cellulaire et des moyens pour communiquer avec un terminal radio (3) par l'intermédiaire d'au moins des première et seconde stations de base (1, 2), les moyens d'interface avec le commutateur comprenant des moyens pour mémoriser provisoirement des tramés de données portant des segments de données issus d'une unité distante, les moyens pour communiquer avec le terminal comprenant des moyens de transmission des trames de données sous forme de blocs de données en mode acquitté, lesdits moyens de mémorisation étant agencés pour conserver chaque trame de données en mémoire tant que l'ensemble des données de la trame n'a pas été acquitté par le terminal, **caractérisée en ce qu'**elle comprend en outre des moyens de retransmission pour, à la suite d'une requête de transfert de communication de la première station de base (1) vers la seconde station de base (2), retransmettre vers le terminal par l'intermédiaire de la seconde station de base, au moins un bloc de données correspondant à une partie seulement des trames de données mémorisées provisoirement et qui ont été transmis par l'intermédiaire de la première station de base.

7. Unité de contrôle selon la revendication 6, dans laquelle ladite partie des trames de données retransmise vers le terminal (3) porte sensiblement un segment de données.

8. Unité de contrôle selon la revendication 6 ou 7, dans laquelle les moyens de retransmission sont agencés pour opérer la retransmission de ladite partie des trames de données mémorisées provisoirement, en réponse à une commande reçue dudit commutateur (5) ayant reçu du terminal radio la requête de transfert de communication.

## Claims

1. A method of controlling data transmission from a remote unit (9) to a radio terminal (3) via a cellular radiocommunication network (8, 10) including base stations (1, 2), a packet control unit (4) capable of communicating with the terminal via at least two of the base stations, and routing means (8) for routing data between the remote unit and the packet control unit, wherein at least some of the data transmitted by the remote unit to the terminal are stored temporarily in the packet control unit, wherein the remote unit is arranged to receive from the terminal acknowledgments relating to transmitted data segments and to retransmit data segments that have not been acknowledged on the expiry of a retransmission time depending on the received acknowledgments, **characterized in that** it comprises the steps of:
- transmitting data segments from the remote unit to the terminal via a first base station (1) connected to the packet control unit; and
- in response to a request for communication transfer to a second base station (2) connected to the packet control unit, retransmitting only a portion of the data stored temporarily in the packet control unit to the terminal via the second base station.

2. A method according to claim 1, wherein said portion of the data retransmitted to the terminal (3) consists of substantially one segment that was previously transmitted via the first base station (1) and has not been acknowledged by the terminal.

3. A method according to claim 1 or claim 2, wherein the communication transfer request is received from the terminal (3) by a switch (5) of the routing means (8) and, in response to reception of said request, said switch commands retransmission of said portion of the data by the packet control unit (4).

4. A method according to any one of the preceding claims, wherein said retransmission time is increased if acknowledgments are received from the remote unit (9) with an increasing time-delay.

5. A method according to any one of the preceding claims, wherein the data transmitted between the routing means (8) and the terminal (3) include an identifier of said terminal independent of the base station (1, 2) to which the terminal is connected.

6. A packet control unit (4) for a cellular communication network, comprising interface means with a switch (5) of the cellular network and means for communicating with a radio terminal (3) via at least first and second base stations (1, 2), the interface means with the switch including storage means for storing temporarily data frames carrying data segments from a remote unit, the means for communicating with the terminal including means for transmitting data frames in the form of data blocks in an acknowledged mode, said storage means being arranged to retain each data frame in memory as long as all of the data of the frame has not been acknowledged by the terminal, **characterized in that** it further comprises retransmission means for, in response to a request for communication transfer from the first base station (1) to the second base station (2), retransmitting to the terminal via the second base station at least one data block corresponding to only a portion of the data frames that are stored temporarily and were transmitted via the first base station.

7. A control unit according to claim 6, wherein said portion of the data frames retransmitted to the terminal (3) conveys substantially one data segment.

8. A control unit according to claim 6 or 7, wherein the retransmission means are arranged to retransmit said portion of the data frames stored temporarily in response to a command received from said switch (5) that has received the communication transfer request from the radio terminal.

## Patentansprüche

1. Steuer-/Regelverfahren zur Übertragung von Daten von einer entfernten Einheit (9) zu einem Funkendgerät (3) mittels eines zellulären Funknetzwerks (8, 10), umfassend Basisstationen (1, 2), wenigstens eine Einheit (4) zur Steuerung/Regelung von Paketen, welche geeignet ist mit dem Endgerät mittels wenigstens zweier Basisstationen zu kommunizieren, und Mittel (8) zur Weiterleitung von Daten zwischen der entfernten Einheit und der Einheit zur Steuerung/Regelung von Paketen, bei welchem wenigstens bestimmte der durch die entfernte Einheit übertragenen Daten mit dem Bestimmungsort des Endgeräts provisorisch in der Einheit zur Steuerung/Regelung der Pakete gespeichert werden, bei welchem die entfernte Einheit dazu eingerichtet ist, vom Endgerät Bestätigungen bezüglich übertragener Datensegmente zu erhalten und nicht bestätigte Datensegmente beim Ablauf einer Rückübertragungszeit, welche von empfangenen Bestätigungen abhängt, zurück zu übertragen, **dadurch gekennzeichnet, dass** es die folgenden Schritte umfasst:
- Übertragen der von der entfernten Einheit stammenden Datensegmente zum Endgerät mittels einer ersten der Basisstationen (1), welche mit einer Einheit zur Steuerung/Regelung von Paketen verbunden ist; und
- in Antwort auf eine Anfrage nach Kommunikationsübergabe auf eine der zweiten Basisstationen (2), welche mit der Einheit zur Steuerung/Regelung der Pakete verbunden ist, Rückübertragen eines Teils nur von provisorisch in der Einheit zur Steuerung/Regelung von Paketen gespeicherten Daten hin zum Endgerät mittels der zweiten Basisstation.

2. Verfahren nach Anspruch 1, bei welchem der zum Endgerät (3) rückübertragene Teil der Daten im wesentlichen ein zuvor mittels der ersten Basisstation (1) übertragenes Segment enthält, welches durch das Endgerät nicht bestätigt worden ist.

3. Verfahren nach Anspruch 1 oder 2, bei welchem die Anfrage nach Kommunikationsübergabe vom Endgerät (3) durch einen Verteiler (5) der Weiterleitungsmittel (8) empfangen wird, und der Verteiler in Antwort auf den Empfang der Anfrage die Rückübertragung des Teils der Daten durch die Einheit (4) zur Steuerung/Regelung der Pakete steuert/regelt.

4. Verfahren nach einem der vorhergehenden Ansprüche, bei welchem die Rückübertragungszeit größer wird, wenn die Bestätigungen bei der entfernten Einheit (9) mit einer wachsenden Verzögerung empfangen werden.

5. Verfahren nach einem der vorhergehenden Ansprüche, bei welchem die zwischen den Weiterleitungsmitteln (8) und dem Endgerät (3) übertragenen Daten ein Kennzeichen des Endgeräts enthalten, und zwar unabhängig von der Basisstation (1, 2), mit welcher das Endgerät in Verbindung steht.

6. Einheit (4) zur Steuerung/Regelung von Paketen für ein zelluläres Kommunikationsnetzwerk, umfassend Schnittstellenmittel mit einem Verteiler (5) des zellulären Netzwerks und Mittel zur Kommunikation mit einem Funkendgerät (3) mittels wenigstens erster und zweiter Basisstationen (1, 2),
wobei die Schnittstellenmittel mit dem Verteiler Mittel zum provisorischen Speichern von Datenrahmen umfassen, welche von der entfernten Einheit stammende Datensegmente enthalten,
wobei die Mittel zur Kommunikation mit dem Endgerät Mittel zur Übertragung der Datenrahmen in Form von Datenblöcken im bestätigten Modus umfassen,
wobei die Mittel zur Speicherung dazu eingerichtet sind, jeden Datenrahmen solange im Speicher zu halten wie die Menge der Daten des Rahmens durch das Endgerät nicht bestätigt worden ist,
**dadurch gekennzeichnet, dass** sie ferner Mittel zur Rückübertragung umfasst, um, in Folge einer Anfrage zur Kommunikationsübertragung von der ersten Basisstation (1) auf die zweite Basisstation (2), wenigstens einen Datenblock mittels der zweiten Basisstation zum Endgerät zurück zu übertragen, welcher einem Teil nur der provisorisch gespeicherten Datenrahmen entspricht, die mittels der ersten Basisstation übertragen worden sind.

7. Steuer-/Regeleinheit nach Anspruch 6, bei welcher der Teil der zum Endgerät (3) rückübertragenen Datenrahmen im wesentlichen ein Datensegment trägt.

8. Steuer-/Regeleinheit nach Anspruch 6 oder 7, bei welcher die Rückübertragungsmittel dazu eingerichtet sind, die Rückübertragung des Teils der provisorisch gespeicherten Datenrahmen zu bewirken, und zwar in Antwort auf einen vom Verteiler (5) empfangenen Steuerbefehl, wobei der Verteiler die Anfrage zur Kommunikationsübergabe vom Funkendgerät empfangen hat.
